# EUROPEAN PATENT APPLICATION

(11) **EP 4 527 678 A1**
(43) Date of publication of application: **26.03.2025**
(21) Application number: 24187278.7
(22) Date of filing: 09.07.2024
(51) Int. Cl.: B60L 53/12, B60L 53/36, B60L 53/38, B60L 53/39, B60L 53/66, B64U 50/38, B64U 70/95, B64U 70/97, B64U 80/25

(54) **WIRELESS CHARGING METHOD FOR URBAN AIR MOBILITY (UAM), AND DEVICE AND SYSTEM FOR THE SAME**

(30) Priority: 21.09.2023 KR 20230126295
(71) Applicant: Hyundai Mobis Co., Ltd., Seoul 06141 (KR)
(72) Inventor: SON, Dae Gon, Seoul 07030 (KR)
(74) Representative: Frenkel, Matthias Alexander

(57) **Abstract**

A wireless charging device for an unmanned aerial vehicle (UAV), a UAV, and a control method thereof, are provided. The wireless charging device includes: a power transmission coil to transmit power to the UAV; antennas to output signals for guiding the UAV to land; and a controller to: control the power transmission coil, the antennas, or a combination thereof; detect whether the UAV has moved to an area for wireless charging; and generate a signal to guide the landing of the UAV for wireless charging; and output the generated signal. The generated signal includes at least one of a beamformed frequency signal, a wavelength controlled signal, or a combination thereof.

## Description

### BACKGROUND

### 1. Field

The embodiments of the present disclosure relate to wireless charging technology for urban air mobility (UAM), and more particularly to technology for aligning wireless power transceivers for wireless charging of urban air mobility (UAM) at preset locations.

### 2. Description of the Related Art

A concept of an urban air mobility (UAM) was first defined by National Aeronautics & Space Administration (NASA) as "safe and efficient air traffic operation in a metropolitan region for manned and unmanned aerial vehicle systems". In recent years, a growing interest in the UAM by governments, businesses, and research institutions has led to rapid proliferation of such new concept.

According to a market report by Global Information, Inc., a market size of the urban air mobility (UAM) is projected to grow from $2.6 billion in 2020 to $9.1 billion in 2030, expanding at a compound annual growth rate (CAGR) of 13.5 %. Factors such as an efficiency improvement, improving safety for people, an increase in an investment demand are expected to drive the market growth.

The UAM is expected to revolutionize conventional modes of transport, including a highway, a railroad, and air and waterways. A 2018 Morgan Stanley blue paper estimates that a global UAM addressable market will reach $1.5 trillion by 2040.

The UAM concept may be further extended to an application in a rural region where conventional ground transportation infrastructures are insufficient. In particular, in addition to the transport sector, the UAM vehicle is expected to be applied in specific scenarios such as tourism, industry, emergency medical services, and fire control.

In the future, a smart UAM vehicle may be equipped with an autonomous driving function and a remote control function to eliminate a need for a pilot on board. This may not only eliminate needs for the pilot on board and a related cost, but also avoid a risk of a safety accident caused by a human error, and control the vehicle from the ground more easily and safely.

The UAM vehicle is a flying vehicle that transports passengers or cargo along a specific point-to-point route within an urban region. Due to constraints of buildings, factories, road traffic, and urban crowds, unlike aircraft using a conventional runway, an ideal vehicle model should be autonomous, compact, efficient, agile, and maneuverable with a function taking off and landing vertically.

In addition, an electrically-driven UAM vehicle is environmentally friendly and has an advantage of no exhaust gas using eco-friendly energy such as solar power, electric energy, hydrogen fuel, and the like instead of conventional fossil fuel in consideration of an atmospheric environmental issue.

The UAM vehicle has an advantage of being faster and more efficient than conventional ground transportation in that individuals and the cargo may move from city to city along a straight air route.

A centralized UAM platform provides a convenient network, eliminating a need for the individuals to own their own UAM vehicle. This may not only increase asset utilization, but also reduce wastage of resources.

In addition, the centralized UAM platform may eliminate a parking problem that dominates many portions of city life today, and may realize a true sharing economy compared to a conventional vehicle.

The UAM may provide short-distance (3km - 100km) air service, and may be designed for city dwellers to effectively solve a "last 50 km" problem that airlines are not able to currently provide.

In order to efficiently operate the electrically-driven UAM vehicle, a safe and efficient charging scheme is required.

In particular, in a case of an unmanned UAM vehicle (hereinafter, "unmanned aerial vehicle (UAV)"), a wireless charging scheme may be applied. In this regard, correct alignment between a wireless power receiver mounted in the UAV and a wireless power transmitter installed in a charging infrastructure is very important to improve a wireless charging efficiency.

### SUMMARY

This Summary is provided to introduce a selection of concepts in simplified form that are further described below in the Detailed Description. This Summary is not intended to identify key features or essential features of the claimed subject matter, nor is it intended to be used as an aid in determining the scope of the claimed subject matter.

An object of the present disclosure is to provide a wireless charging method for an UAV, and a device and system for the same.

Another object of the present disclosure is to provide a method for aligning wireless power transceivers to efficiently perform wireless charging of the UAV, and a device and system for the same.

Another object of the present disclosure is to provide a method for utilizing antenna beamforming to align wireless power transceivers (or transceiver coils).

Technical subjects to be solved by the present disclosure are not limited to the above-mentioned technical solutions, and it should be noted that other technical subjects not described above can be understood by those skilled in the art from the description of the present disclosure below.

In a general aspect of the disclosure, a wireless charging device for an unmanned aerial vehicle (UAV), the wireless charging device includes: a power transmission coil configured to transmit power to the UAV; a plurality of antennas configured to output signals for guiding the UAV to land; and a controller configured to: control the power transmission coil, the antennas, or a combination thereof; detect whether the UAV has moved to an area for wireless charging; generate a signal to guide the landing of the UAV for wireless charging; and output the generated signal, wherein the generated signal includes at least one of a beamformed frequency signal, a wavelength controlled signal, or a combination thereof.

The controller may be further configured to: generate a plurality of frequency signals or wavelength signals; perform beamforming on the generated frequency signals or wavelength signals; and output the plurality of beamformed signals using the plurality of antennas.

The wireless charging device may further include: a sensor configured to detect whether the UAV has completed a landing.

The controller may be further configured to stop output of the plurality of beamformed signals in response to detecting a landing completion of the UAV.

The controller may be further configured to start wireless charging for the UAV in response to detecting a landing completion of the UAV.

The UAV may include one or more batteries configured to be charged by power received from the power transmission coil, and the one or more batteries may provide power to the UAV.

The UAV may include an Advanced Air Mobility (AAM), an Urban Air Mobility (UAM), or a Regional Air Mobility (RAM).

In another general aspect of the disclosure, an unmanned aerial vehicle (UAV) includes: a power reception coil configured to receive power from a wireless power transmitter; an antenna configured to receive signals for guiding a landing of the UAV; and a controller configured to: control the power reception coil, the antenna, or a combination thereof; detect whether the UAV has moved to an area for wireless charging; receive a beamformed signal to guide the landing of the UAV for wireless charging; and control a landing posture of the UAV based on the received beamformed signal, wherein the beamformed signal includes at least one of a frequency controlled signal, a wavelength controlled signal, or a combination thereof.

The UAV may further include one or more batteries configured to be charged by power received from the power transmission coil, wherein the one or more batteries may provide power to the UAV.

The UAV may include an Advanced Air Mobility (AAM), an Urban Air Mobility (UAM), or a Regional Air Mobility (RAM).

In yet another general aspect of the disclosure, a control method for performing wireless charging of an unmanned aerial vehicle (UAV) by a wireless charging device that includes a power transmission coil configured to transmit power to the UAV, a plurality of antennas configured to output signals for guiding landing of the UAV, and a controller configured to control the power transmission coil, the antennas, or a combination thereof, includes: detecting whether the UAV has moved to an area for wireless charging; generating a signal to guide a landing of the UAV for wireless charging; and outputting the generated signal, wherein the generated signal includes at least one of a beamformed frequency signal, a wavelength controlled signal, or a combination thereof.

The control method may further include: generating at least one of a plurality of frequency signals, a plurality of wavelength signals, or a combination thereof; performing beamforming on at least the generated frequency signals, the generated wavelength signals, or a combination thereof; and outputting the plurality of beamformed signals using the plurality of antennas.

The control method may further include: stopping the outputting of the plurality of beamformed signals in response to detecting a completion of the landing of the UAV.

In another general aspect of the disclosure, a control method for performing wireless charging by an unmanned aerial vehicle (UAV) that includes a power reception coil configured to receive power from a wireless power transmitter, an antenna configured to receive signals for guiding landing of the UAV, and a controller configured to control the power reception coil, the antenna, or a combination thereof, includes: detecting whether the UAV has moved to an area for wireless charging; receiving a beamformed signal to guide a landing of the UAV for wireless charging; and controlling a landing posture of the UAV based on the received beamformed signal, wherein the beamformed signal includes at least one of a frequency controlled signal, a wavelength controlled signal, or a combination thereof.

The control method may further include aligning, by the UAV, the power reception coil of the UAV to a power transmission coil of the wireless power transmitter by adjusting the landing posture of the UAV.

The UAV may be configured to land on a vertiport by aligning the power transmission coil of the wireless power transmitter with the power reception coil of the UAV.

It is to be understood that both the foregoing general description and the following detailed description of the present disclosure are exemplary and explanatory and are intended to provide further explanation of the disclosure as claimed.

### BRIEF DESCRIPTION OF THE DRAWINGS

The accompanying drawings, which are included to provide a further understanding of the disclosure and are incorporated in and constitute a part of this application, illustrate embodiment(s) of the disclosure and together with the description serve to explain the principle of the disclosure.
FIG. 1 is a block diagram illustrating an overall structure of a wireless power transmission system according to the embodiment of the present disclosure.
FIG. 2 is a block diagram illustrating a detailed structure of a wireless charging system for urban air mobility (UAM) according to the embodiment of the present disclosure.
FIG. 3 is a schematic diagram illustrating a wireless charging system according to the embodiment of the present disclosure.
FIG. 4 is a diagram illustrating an UAV equipped with a wireless power receiver according to the embodiment of the present disclosure.
FIG. 5 is a flowchart illustrating a method for operating a wireless power transmitter according to the present disclosure according to the embodiment of the present disclosure.
FIG. 6 is a flowchart illustrating a method for operating the wireless power transmitter according to the embodiment of the present disclosure.
FIG. 7 is a flowchart illustrating a method for operating the wireless power receiver and the UAV equipped with the wireless power receiver according to the embodiment of the present disclosure.
FIGS. 8 to 15 are diagrams illustrating various examples of a transmission coil and a transmission antenna of the wireless power transmitter according to the embodiments of the present disclosure.

### DETAILED DESCRIPTION

Hereinafter, embodiments of the present disclosure will be described in detail with reference to the accompanying drawings so that the present disclosure may be easily realized by those skilled in the art. However, the present disclosure may be achieved in various different forms and is not limited to the embodiments described herein. In the drawings, parts that are not related to a description of the present disclosure are omitted to clearly explain the present disclosure and similar reference numbers will be used throughout this specification to refer to similar parts.

In the specification, when a part "includes" an element, it means that the part may further include another element rather than excluding another element unless otherwise mentioned.

In addition, in the specification, "occupant", "passenger", "driver" "user" etc. are mentioned for description of the present disclosure, and may be used interchangeably therewith.

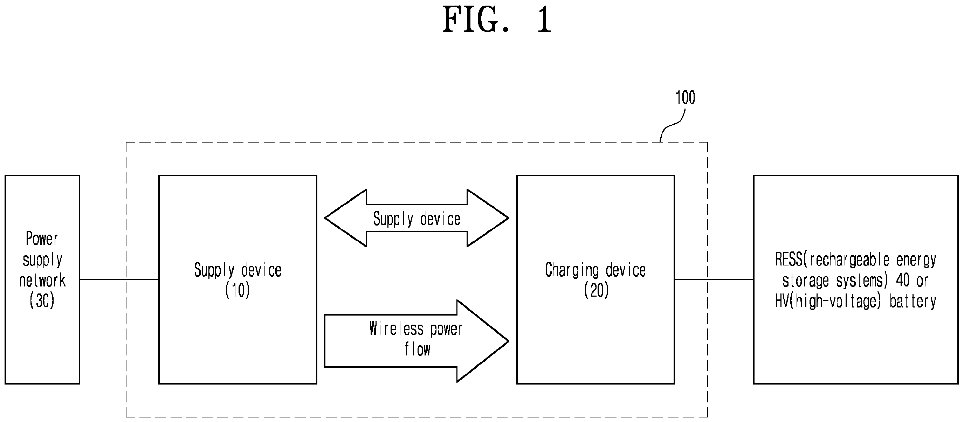

FIG. 1 is a diagram illustrating the overall structure of a wireless power transmission system according to an embodiment.

Referring to FIG. 1, a wireless power transmission system 100 may include a supply device 10 and a charging device 20.

The supply device 10 may convert AC (or DC) electrical energy supplied from a power supply network 30 into AC electrical energy required by the charging device 20, and then transmit the converted AC electrical energy to the charging device 20using a predetermined wireless energy transmission method. Here, the wireless energy transmission method may include electromagnetic induction, electromagnetic resonance (or magnetic resonance), microwaves, and radio frequency (RF) wireless power transmission. The electromagnetic induction is a method of transferring energy using an induced electromotive force generated by a magnetic induction of AC power between the primary coil provided in the supply device 10 and the secondary coil provided in the charging device 20. On the other hand, in the method of electromagnetic resonance, when a magnetic field that vibrates at a specific resonant frequency is generated through the primary coil provided in the supply device 10, the charging device 20induces a magnetic field in the secondary coil having the same resonant frequency to transfer energy. The RF wireless power transmission is a method of transmitting an RF wireless power signal to the receiver through beamforming using a phased array antenna system of the transmitter. This method may allow remote wireless charging up to a radius of several meters, compared to the conventional electromagnetic induction or electromagnetic resonance.

The supply device 10 and the charging device 20may be interconnected through short-range wireless communication to exchange various kinds of information for wireless power transmission.

The charging device 20 may rectify the wireless power received from the supply device 10 and then supply the rectified power to the in-device - that is, on-board - rechargeable energy storage systems (RESS) or high voltage (HV) battery.

The supply device 10 according to the embodiment may be installed in a building, a road, a parking lot, a charging hub, or a vertiport, which is infrastructure for takeoff and landing of urban air mobility located on land, in the air, on water or on the roof of a building. When a wireless power transmission pad for wireless power transmission is mounted on the charging device 20, the charging device 20 may perform a function as a supply device. Thereby, wireless charging may be performed between the electrically powered devices 20.

For example, when the charging device 20 is equipped with multiple wireless power reception pads, the charging device 20 may receive wireless power from other multiple charging devices 20 equipped with a wireless power transmission pad at the same time to charge the battery.

As another example, when the charging device 20 is equipped with multiple wireless power transmission pads, the charging device 20 may transmit wireless power to other multiple charging devices 20 equipped with a wireless power reception pad to charge the multiple charging devices 20 at the same time. That is, when the charging device 20 is unable to move to the supply device 10 due to the current battery charge amount, it may be operatively connected to another nearby charging device 20 to perform charging between the charging devices 20. As an example, a charging device to supply wireless power and a charging device to receive the wireless power may be dynamically determined based on the current battery charge amount of the charging device 20.

The charging device 20 according to the embodiment may be mounted on various means of transportation. As an example, the charging device 20 may be applied to an electric vehicle, an unmanned drone, urban air mobility, multi-modal mobility (or hybrid air mobility) operating on land and in the air or on land and at sea.

In a following embodiment, a description will be made with an example in which the charging device 20 is mounted on the urban air mobility.

The charging device 20 according to an embodiment may be mounted at one side of a lower portion of the urban air mobility, but this is only one embodiment. Depending on a design of those skilled in the art, the charging device 20 may be mounted at one side of an upper portion of the urban air mobility, one side of a front portion, one side of a rear portion, and one side of a left/right portion.

The supply device 10 according to the embodiment may be operatively connected to other supply devices by a wired or wireless communication system.

The charging device 20 according to an embodiment may be associated with another charging device 20 via a wireless communication system. To this end, the charging device 20 may be connected to a communication terminal (not shown) disposed in the urban air mobility via a communication network inside the urban air mobility to exchange signals and information.

For example, the wireless communication system may be a multiple access system that supports communication with multiple users by sharing an available system resource (e.g., bandwidth, transmit power, etc.). Examples of the multiple access system may include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multi carrier frequency division multiple access (MC-FDMA) system.

The charging device 20 according to the embodiment may be connected to another supply device by wireless communication. As an example, the charging device 20 may be connected to multiple supply devices 10. In this case, the charging device 20 may receive wireless power from the supply devices 10 simultaneously. Based on the wireless charging efficiency between the charging device 20 and the supply devices 10, the charging device 20 may dynamically determine at least one supply device 10 to receive power. Based on the wireless charging efficiency between the charging device 20 and the supply devices 10, the supply devices 10 may dynamically determine at least one charging device 20 to transmit power.

In the above-described embodiment, it has been described that the supply device 10 and the charging device 20 to perform wireless charging are dynamically determined based on the wireless charging efficiency. However, this is merely one embodiment. The supply device 10 and the charging device 20 to perform wireless charging may be dynamically determined by further considering the type and capability of the supply device 10, the type and capability of the charging device 20, and the like. As an example, the type and capability of the charging device 20 may depend on the type of the transportation means on which the charging device 20 is mounted. Accordingly, the type and capability of the supply device 10 matching the charging device 20 may depend on the charging device 20.

The charging device 20 according to an embodiment may perform a function as a wireless power transmitting relay - hereinafter, for convenience of description, referred to as a relay or a relay node - that transmits power received from the supply device 10 to another charging device. In this case, the charging device 20 may include both a wireless power receiver (or a wireless power receiving pad) for receiving the wireless power and a wireless power transmitter (a wireless power transmitting pad) for transmitting the wireless power. In an embodiment, locations where the wireless power receiver and the wireless power transmitter are mounted on one urban air mobility may be different from each other, but this is only one embodiment. The wireless power receiver and the wireless power transmitter may be constructed as one module and mounted at a specific location. As an example, the wireless power receiving pad for receiving the power from the supply device 10 may be mounted at one side of the lower portion of the urban air mobility, and the wireless power transmitting/receiving pad for receiving the wireless power from another urban air mobility or transmitting the wireless power to another urban air mobility may be mounted at one side of the upper portion of the urban air mobility.

Through the above-described embodiments, the urban air mobility equipped with the charging device 20 according to the present disclosure may not only receive the wireless power from the supply device 10 to charge a battery thereof, but also transmit and receive the wireless power via collaboration with another urban air mobility stopped (or in flight). For example, when a battery charged level during the flight is not sufficient to fly to the nearest supply device 10 or when the urban air mobility deviates from a route due to unusual weather or the like, the corresponding urban air mobility may make a request for emergency air charging to another nearby urban air mobility (or a central control center).

As an example, when another nearby urban air mobility that has received the request for the emergency air charging is capable of the emergency air charging based on a battery charged state thereof, another nearby urban air mobility may move toward the urban air mobility that has requested the emergency air charging and supply the wireless power via the wireless charging during the flight.

As another example, the central control center (or an urban air mobility operator (UAM air operator)) who has received the request for the emergency air charging may search for another urban air mobility around the urban air mobility that has requested the emergency air charging, and determine a target to participate in the emergency air charging based on the current battery charged state of another searched urban air mobility. When the target to participate in the emergency air charging is determined, after transmitting a predetermined control signal to the nearby urban air mobility determined as the target to participate in the emergency air charging to guide the nearby urban air mobility to a location of the urban air mobility that has requested the emergency air charging, the central control center may control the nearby urban air mobility to perform the wireless charging during the flight.

The charging device 20 controls at least one switch provided in the wireless power transmission pad and the wireless power reception pad to activate/deactivate (ON/OFF) the operation of the corresponding wireless power transmission pad and/or the wireless power reception pad.

In the above embodiment, the description has been made with the example in which the charging device 20 receives the wireless power from one supply device 10, but this is only one embodiment. The charging device 20 may include a plurality of wireless power receiving pads to simultaneously receive the wireless power from a plurality of supply devices 10 to perform fast charging.

In another embodiment, the charging device 20 may further include wired charging means as well as wireless charging means. In this case, the fast charging may be performed using at least one of the wireless charging means and the wired charging means.

A charging device 20 of a first urban air mobility according to an embodiment may divide the wireless power received from the supply device 10 via negotiation with a charging device 20 equipped in a second urban air mobility and transmit the divided wireless power to the second urban air mobility. As an example, amounts of power charged by the first urban air mobility and the second urban air mobility may be dynamically determined based on respective battery charged states of the urban air mobilities. As another example, the amounts of power charged by the first urban air mobility and the second urban air mobility may be dynamically determined based on respective flight reservation states as well as the respective battery charged states of the first urban air mobility and the second urban air mobility. That is, the longer the reserved flight distance corresponding to each urban air mobility, the more power consumption is expected. Therefore, it is necessary to further consider a flight plan, a flight distance, and the like for power distribution.

The charging device 20 according to an embodiment may determine whether power relay to another urban air mobility is available based on a battery charged state of a RESS 40 thereof. As an example, when the battery charged level (or a battery output voltage) of the first urban air mobility is equal to or higher than a predetermined reference value, the charging device 20 of the first urban air mobility may transmit the power received from the supply device 10 to the charging device 20 of the second urban air mobility. On the other hand, when the battery charged level (or the battery output voltage) of the first urban air mobility is lower than the predetermined reference value, the charging device 20 of the first urban air mobility may control such that the power received from the supply device 10 is not relayed to the charging device 20 of the second urban air mobility and used only for charging the RESS 40 thereof.

The communication terminal mounted on the urban air mobility may be connected to the supply device 10, another urban air mobility, the central control center, and the like via V2X (Vehicle to Everything) communication supported by 4G LTE/5G NR communication to exchange various information.

The urban air mobility may be equipped with a global positioning system (GPS) receiver to receive and decode a GPS satellite signal. The urban air mobility may obtain current GPS coordinate information from the GPS satellite signal and provide the GPS satellite signal to the supply device 10 and/or another urban air mobility via the communication terminal. In one example, the communication terminal mounted on the urban air mobility may acquire GPS coordinate information of the supply device 10 and/or another urban air mobility.

V2X refers to a communication technology for exchanging information with other vehicles, pedestrians, and infrastructure-built objects through wired/wireless communication. V2X may be divided into four types: vehicle-to-vehicle (V2V) for vehicle-to-vehicle communication; vehicle-to-infrastructure (V2I) for communication between a vehicle and infrastructure; vehicle-to-network (V2N) for communication between a vehicle and a communication network; and vehicle-to-pedestrian (V2P) for communication between a vehicle and a pedestrian. V2X communication may be provided via a PC5 interface and/or a Uu interface (i.e., a Universal Mobile Telecommunications System (UMTS) air interface).

Sidelink (SL) is a communication scheme that establishes a direct wireless link between UAMs to enable direct exchange of information between the vehicle terminals without intervention of a base station (BS) or infrastructure (for example, RSU). SL is considered as a way to alleviate the burden on the BS according to the rapidly increasing amount of data traffic and to minimize the transmission delay in UAM-to-UAM communication.

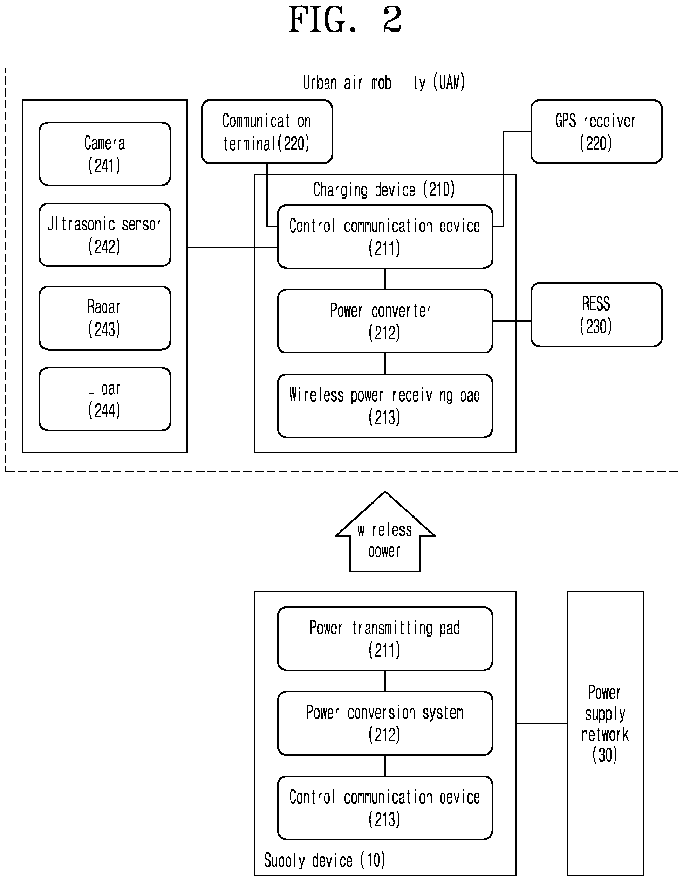

FIG. 2 is a diagram for illustrating a detailed structure of a wireless charging system for an urban air mobility according to an embodiment.

Referring to FIG. 2, a wireless charging system 200 for the urban air mobility may largely include a supply device 10, a power supply network 30, and a first urban air mobility 201.

In the embodiment in FIG. 2, wireless charging for one urban air mobility 201 is described as an example, but this is only one embodiment. The number of urban air mobilities 201 that may be simultaneously charged by the supply device 10 may be equal to or greater than two. The maximum number of urban air mobilities 201 that may be simultaneously charged corresponding to one supply device 10 may be dynamically determined by a maximum suppliable power of the supply device 10, required power of the urban air mobility 201 to be charged, and the like.

The supply device 10 may include a wireless power transmitting pad 11 (e.g., a wireless power transmission pad), a power conversion system 12, and a control communication device 13, but may not be limited thereto, and may further include a GPS receiver (not shown), an ultrasonic sensor (not shown), and the like.

The control communication device 13 may control overall operations and input/output of the supply device 10. In addition, the control communication device 13 may control the power conversion system 12 to convert power provided from the power supply network 30 to power required for charging the urban air mobility 201. In this regard, an AC power signal converted by the power conversion system 12 may be wirelessly transmitted via a transmission coil of the wireless power transmitting pad 11. The wireless power transmitted via the wireless power transmitting pad 11 may be transmitted to a wireless power receiving pad 213 via an electromagnetic induction phenomenon (or an electromagnetic resonance phenomenon).

In an embodiment, there may be a plurality of wireless power transmitting pads 11 equipped in the supply device 10 or one wireless power transmitting pad 11 may have a plurality of transmission coils for simultaneously charging the plurality of urban air mobility 201.

The supply device 10 according to an embodiment may further include the GPS receiver (not shown) and the ultrasonic sensor. The supply device 10 may provide GPS coordinate information thereof to the urban air mobility 201. In addition, the supply device 10 may receive sensor state information of the urban air mobility 201, and may drive the ultrasonic sensor based on the sensor state information of the urban air mobility 201. In this case, the urban air mobility 201 may sense an ultrasonic signal transmitted by the supply device 10 to identify a location of the supply device 10, and may move to the identified location and align the wireless power transmitting/receiving pad, and then, perform the wireless charging.

Referring to FIG. 2, the urban air mobility 201 may include at least one of a charging device 210, a communication terminal 220, a rechargeable energy storage system (RESS) 230 (e.g., a power storage system), a sensor 240, and a GPS receiver 250. In this regard, the sensor 240 may include at least one of a camera 241, an ultrasonic sensor 242, a radar 243, and a light detection and ranging (LiDAR) 244. For example, the camera 241 may include at least one of a front camera, a rear camera, a left/right camera, an upper camera, and a lower camera. For example, the camera 241 may include at least one of a surround view monitor (SVM) camera, an RGB camera, and an infrared camera.

The charging device 210 may include a control communication device 211, a power converter 212, and a wireless power receiving pad 213.

The control communication device 211 (e.g., a controller in conjunction with a transceiver) may control input/output and overall operations of the charging device, and may perform communication with external device(s).

The control communication device 211 may communicate with various electric control units (ECUs) via an internal communication network of the urban air mobility 201. In this regard, the ECU may include a steering system for steering control, a braking system for controlling stopping and parking, a driving system for controlling driving of a motor for the flight, and the like, but the present disclosure may not be limited thereto. The internal communication network of the urban air mobility 201 may include a controller area network (CAN), a local interconnect network (LIN), a FlexRay, a media oriented systems transport (MOST) communication network, and the like, but the present disclosure may not be limited thereto.

In addition, the control communication device 211 may exchange various control signals and state information with the control communication device 13 of the supply device 10 via in-band (or out-of-band) communication for receiving the wireless power reception. In this regard, the in-band communication refers to a communication scheme using the same frequency band as a frequency band used for transmitting the wireless power. For example, IEEE 802.11p communication, 4G LTE communication, 5G NR (New Radio) millimeter wave (mmWave) communication, and the like may be used as the out-of-band communication, but the present disclosure may not be limited thereto. Based on a design of those skilled in the art, Bluetooth communication, RFID communication, near field communication (NFC), infrared short-range wireless communication (IR-DSRC), optical wireless communication (OWC), and the like may be applied.

In addition, the control communication device 211 may exchange information with another urban air mobility via the communication terminal 220.

In addition, the communication terminal (not shown) may be mounted on the supply device 10 as well. In this case, the control communication device 211 may exchange the various control signals and the state information with the supply device 10 via the communication terminal 220.

In addition, the control communication device 211 may exchange the various control signals and the state information with a user device - including, for example, a smartphone, a smart key, and the like - via the communication terminal 220. To this end, the communication terminal 220 may have a Bluetooth communication function for communication with the smart phone and a frequency communication function for communication with the smart key. In this regard, the frequency communication function may include a function of receiving a radio frequency (RF) radio wave of 433.92 MHz frequency from the smart key and a function of transmitting a low frequency (LF) radio wave of 125 kHz frequency to the smart key.

Transmitter state information transmitted from the supply device 10 to the charging device 210 of the urban air mobility 201 may include transmitter identification information, information about maximum transmittable power, information about a supported power category, information about the maximum number of devices that may be charged simultaneously, information about a type of supported charging devices, software version information, firmware version information, communication protocol version information, IP address information, MAC address information, port number information, authentication and security information, and the like.

Receiver state information transmitted from the charging device 210 of the urban air mobility 201 to the supply device 10 may include receiver identification information, information about required power, information about maximum receivable power/voltage/current, information about the battery charged state, information about a battery output voltage, software version information, firmware version information, communication protocol version information, IP address information, MACK address information, port number information, authentication and security information, but the present disclosure may not be limited thereto. In an embodiment, information about the battery charged state and information about the battery output voltage between the urban air mobilities 201 may be exchanged via communication between the communication terminals thereof.

The control communication device 211 may acquire information about the location and capability information of the supply device 10 via the communication terminal 220.

In addition, the control communication device 211 may acquire information about the location and capability information of another nearby urban air mobility 201 via the communication terminal 220.

As an example, the capability information exchanged between the urban air mobilities may include information about whether the corresponding urban air mobility is able to perform the wireless charging and information about whether the wireless charging is available between the urban air mobilities, information about a mounting location of the wireless power transmitting/receiving pad mounted on the corresponding urban air mobility, information about the battery charged state, information about whether the corresponding urban air mobility is on a mission, and the like, but the present disclosure may not be limited thereto.

When the wireless power receiving pad 213 of the charging device 210 is aligned with the wireless power transmitting pad 11 thereof, the control communication device 13 of the supply device 10 may control the power conversion system 12 to convert the power supplied from the power supply network 30 into power required by the urban air mobility 201. Thereafter, the converted power may be transmitted to the wireless power receiving pad 213 of the urban air mobility 201 in an electromagnetic induction manner via the wireless power transmitting pad 11.

When the urban air mobility 201 approaches the supply device 10 to be within a certain distance in association with the sensor 240, the control communication device 211 may perform fine alignment of the transmitting/receiving pad in association with the user device.

In the following specification, a method, device, and system for wireless charging for urban air mobility (UAM) will be described in detail with reference to the attached drawings.

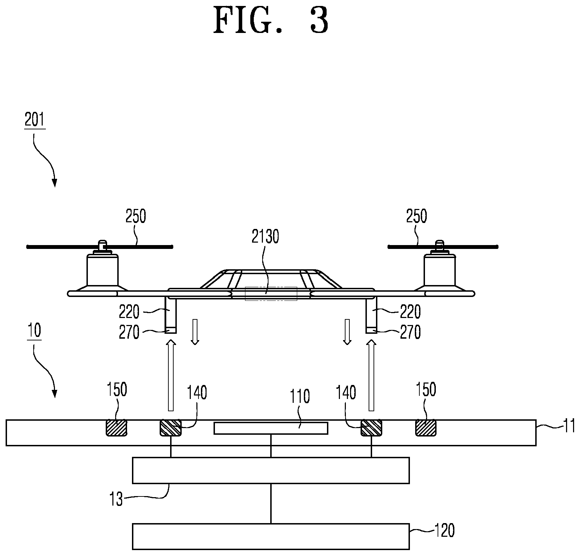

FIG. 3 is a schematic diagram illustrating a wireless charging system according to the embodiment of the present disclosure.

Referring to FIG. 3, the wireless charging system may include an urban air mobility (UAM) (hereinafter referred to as an "unmanned aerial vehicle (UAV)") 201 that broadly includes a wireless power transmitter 10 and at least one power reception coil 2130 for wirelessly receiving power. The UAV may also include an Advanced Air Mobility (AAM), and a Regional Air Mobility (RAM).

The wireless power transmitter 10 according to the embodiment may be mounted at one side of a vertiport for takeoff and landing of the UAV 201.

The wireless power transmitter 10 may convert power received from a power source 120 into a wireless power signal by magnetic induction or magnetic resonance through the transmission coil 110 disposed at one side of a transmission pad 11, and may thus provide the wireless power signal to at least one power reception coil 2130 of the UAV 201.

At least one transmission antenna 140 that outputs a light beam for guiding a landing position of the UAV 201 for wireless charging may be provided at one side of the transmission pad 11 of the wireless power transmitter 10.

A control communication unit 13 provided in the wireless power transmitter 10 may generate a signal for guiding the landing position of the UAV 201, and may provide the generated signal to at least one transmission antenna 140. Here, a radio frequency (RF) signal output by the transmission antenna 140 may be beamformed and transmitted in a vertical direction of the transmission pad 11.

The wireless power transmitter 10 according to the embodiment may generate RF signals of different frequency signals or different wavelengths for each transmission antenna 140.

At least one reception antenna 270 configured to receive RF signals output by the transmission antenna 140 may be provided at one side of the UAV 20. For example, when the UAV 201 is equipped with a plurality of reception antennas 270, a receivable frequency or wavelength for each reception antenna may be different.

The UAV 201 may include a battery (not shown) to be charged using power received from the wireless power transmitter 10.

The UAV 201 may adjust a landing posture thereof based on the signals received through the reception antenna 270.

That is, the UAV 201 may align the power transmission coil 110 and the power reception coil 2130 through landing posture adjustment, and may land on the vertiport using the aligned power transmission coil 110 and the power reception coil 2130. In some implementations, a detection sensor 150 that can sense a landing gear 220 of the UAV 201 may be provided at one side of the transmission pad 11.

When landing of the UAV 20 is detected by the detection sensor 150, the wireless power transmitter 10 may terminate RF signal transmission through the transmission antenna 140.

In some implementations, the detection sensor 150 may be implemented as a plurality of detection sensors 150, and may include at least one of an optical sensor (e.g., an infrared sensor or a laser sensor), a pressure sensor for sensing a change in pressure, and a Hall sensor.

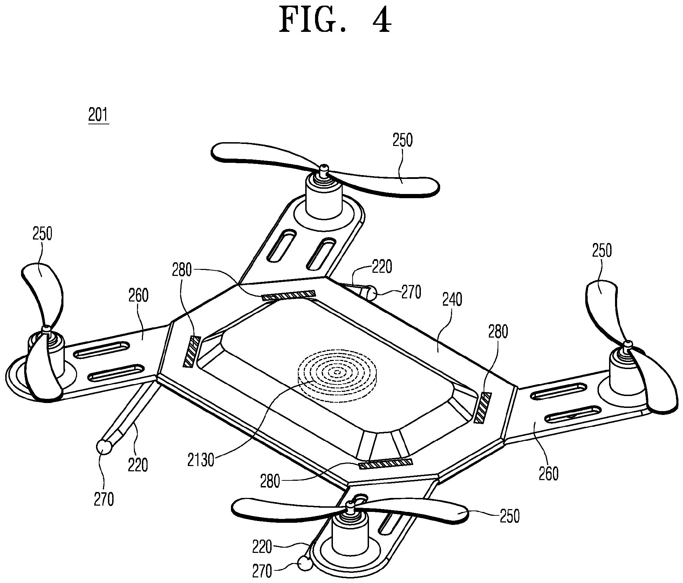

FIG. 4 is a diagram illustrating an UAV equipped with a wireless power receiver according to the embodiment of the present disclosure.

Referring to FIG. 4, the UAV 201 may be implemented as any one of a fixed-wing aircraft and a rotary-wing aircraft.

The UAV 201 according to the embodiment of the present disclosure may be implemented as a multicopter-type UAV 201 equipped with a plurality of rotors 250 located outside the main body 240, and a detailed description thereof will hereinafter be given with reference to the attached drawings.

The UAV 201 may include a plurality of inverters/motors (not shown) configured to drive one or more power reception coils 2130 and a plurality of rotors 250, and at least one battery pack 280 configured to supply power required to drive each inverter/motor.

The rotor 250 may be provided at the other side of a guide body 260, one side of which is connected to the main body 240, and the battery pack corresponding to each rotor 250 may be placed on one side of the guide body 260.

The UAV 201 may be a kind of rotary-wing aircraft that can perform takeoff flight, ascending flight, descending flight, forward flight, backward flight, left-turn flight, right-turn flight, and landing flight by adjusting the rotation direction and rotation speed of the plurality of rotors 250.

The UAV 201 may be equipped with at least one reception antenna 270 that receives RF signals for wireless charging alignment in which the transmission coil 110 and the reception coil 2130 are aligned. As an example, the reception antenna 270 may be disposed at one side of the landing gear 220 as shown in FIG. 4, but this is merely an example. The reception antenna 270 may also be mounted at different positions depending on the shape of the UAV 201 and the arrangement shape of the reception coil 2130.

In some implementations, the reception coil 2130 and the transmission coil 110 may be configured to transmit power by magnetic induction using either the wireless power consortium (WPC) Qi standard or the power matters alliance (PMA) standard.

That is, since the WPC standard and the PMA standard have different power frequencies, the reception coil 2130 and the transmission coil 110 may be configured in a form applicable to the corresponding standard method. In order to simultaneously use the WPC standard and PMA standard, the reception coil 2130 and the transmission coil 110 may use dual mode coils.

In another embodiment, the reception coil 2130 and the transmission coil 110 may wirelessly transmit and receive power using a self-resonance standard.

In addition, the UAV 201 may include a rectifier (not shown) for converting AC power into DC power through the reception coil 2130 by connecting to the reception coil 2130. Thereafter, DC power from the rectifier may be converted into power required by the battery pack 280 through a DC/DC converter (not shown).

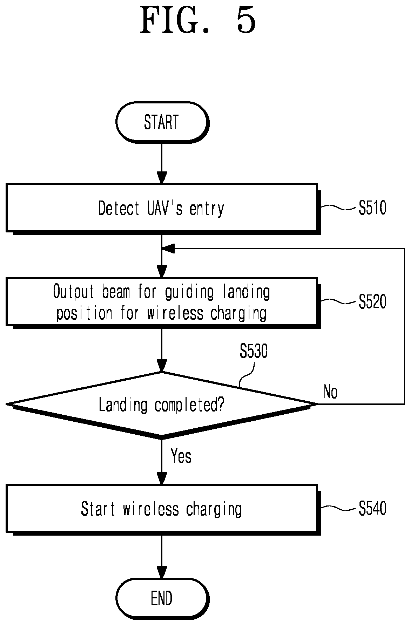

FIG. 5 is a flowchart illustrating a method for operating and controlling the wireless power transmitter according to the present disclosure according to the embodiment of the present disclosure.

Referring to FIG. 5, the wireless power transmitter 10 may detect that the UAV has entered a space for wireless charging (S510). The UAV includes a wireless power receiver or a wireless power reception coil.

The wireless power transmitter 10 may output or transmit a beam for inducing or guiding the landing position of the UAV (S520). The UAV may detect the beam and, for example, may detect the position or direction where a received beam has a maximum size (or magnitude). Accordingly, the UAV may determine the landing position and may control the body of the UAV to move to the determined landing position.

The wireless power transmitter 10 may determine whether landing of the UAV has been completed (S530).

Depending on the determination that the UAV has landed, the wireless power transmitter 10 may initiate wireless charging for the wireless power receiver or power reception coil of the UAV (S540).

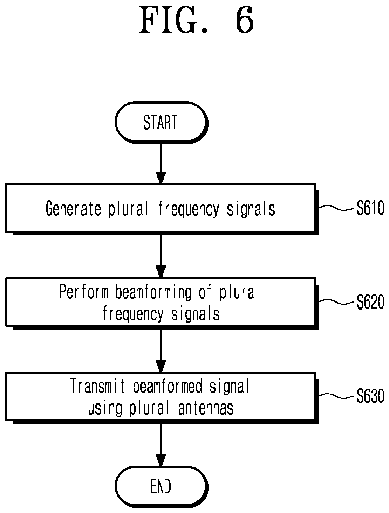

FIG. 6 is a flowchart illustrating a method for operating and controlling the wireless power transmitter according to the embodiment of the present disclosure.

Referring to FIG. 6, the wireless power transmitter 10 may generate a plurality of frequency signal or a plurality of wavelength signals for a beam to induce or guide the landing position of the UAV (S610).

The wireless power transmitter 10 may perform beamforming on the plurality of frequency signals or wavelength signals (S620). Beamforming refer to technology that creates an antenna beam in a specific direction by changing the amplitude and phase of the signal supplied to each antenna in a state where multiple antennas are arranged at regular intervals, and then transmits and receives signals in the specific direction, and such beamforming can be applied to the transmission antenna and/or the reception antenna. Since beamforming itself is well known in the art, a detailed description thereof will herein be omitted.

The wireless power transmitter 10 may transmit a plurality of beamformed frequency signals or a plurality of beamformed wavelength signals using the plurality of antennas (S630).

Such beamformed signals may have directivity. In order to optimize the wireless power charging efficiency, the wireless power transmitter 10 may direct or guide the UAV or the wireless power receiver to preset alignment positions so that the wireless power transmitter 10 can be well aligned with the UAV or the wireless power receiver (or the reception coil).

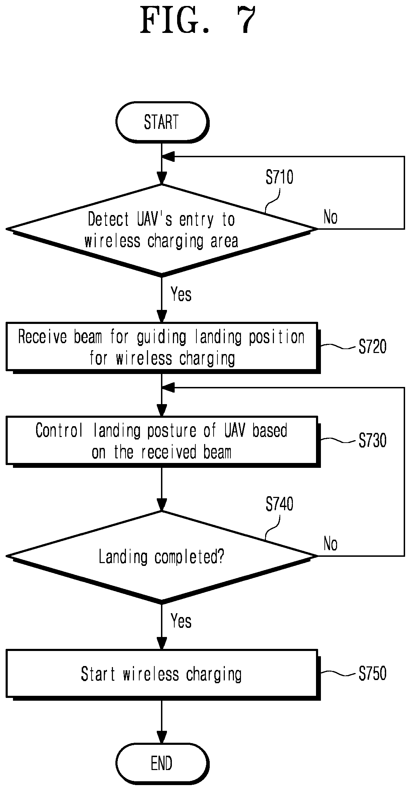

FIG. 7 is a flowchart illustrating a method for operating the wireless power receiver and the UAV equipped with the wireless power receiver according to the embodiment of the present disclosure.

Referring to FIG. 7, the wireless power receiver or the UAV 201 may determine whether wireless the power receiver or the UAV 201 has entered an area for wireless charging (S710).

The UAV 201 may receive a beamformed signal received from the wireless power transmitter 10 (S720) and may control the landing posture for wireless charging based on the received beamformed signal (S730). The beamformed signal received from the transmission antenna 140 of the wireless power transmitter 10 is used to guide the landing position for wireless charging.

The UAV 201 may determine whether landing thereof has been completed (S740).

Once landing is completed, the UAV 201 may initiate wireless charging with the wireless power transmitter 10 (S750).

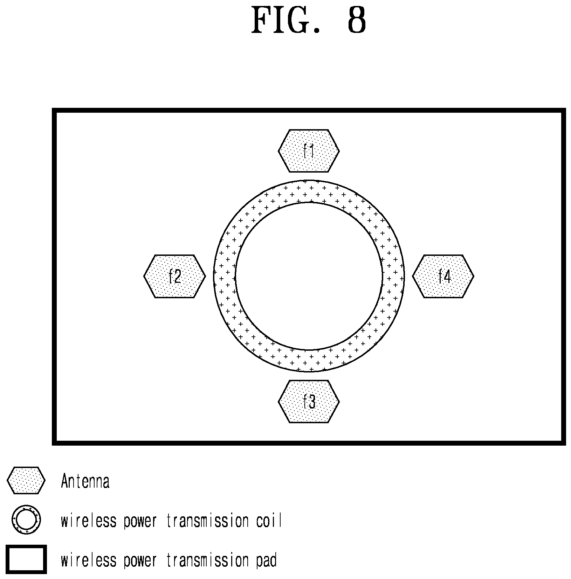

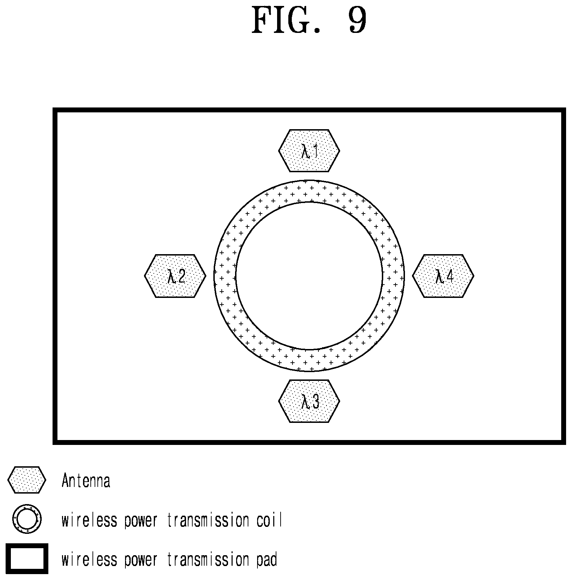

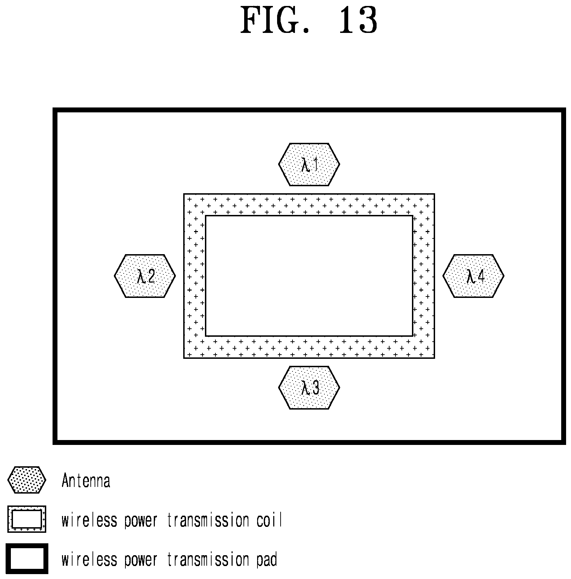

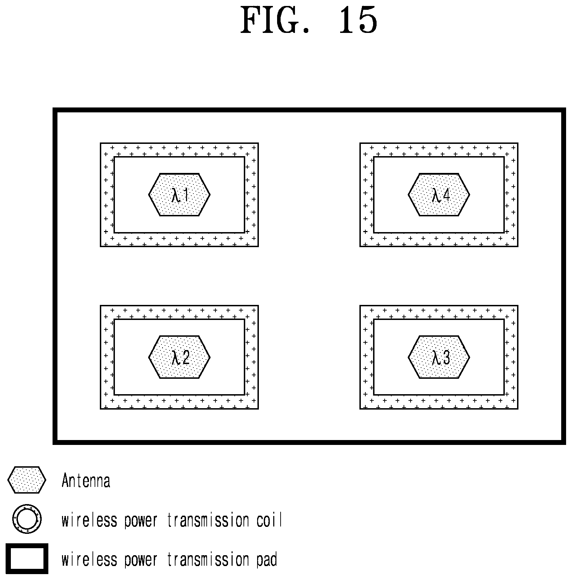

FIGS. 8 to 15 are diagrams illustrating various examples of the transmission coil and the transmission antenna of the wireless power transmitter according to the embodiments of the present disclosure. Although the number of transmission antennas 140 is illustrated as four in FIGS. 8 to 15, the scope or spirit of the present disclosure is not limited thereto.

In FIGS. 8 to 9, the transmission coil 110 is formed in a circular shape, and each transmission antenna 140 (i.e., port) may output a frequency or wavelength-controlled transmission signal that guides the landing position.

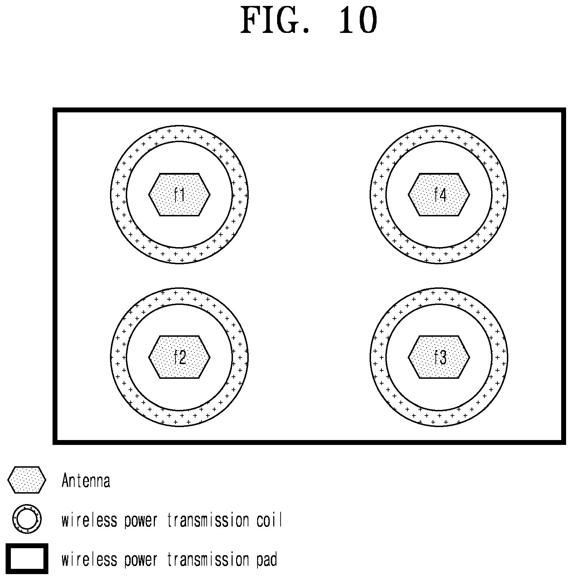

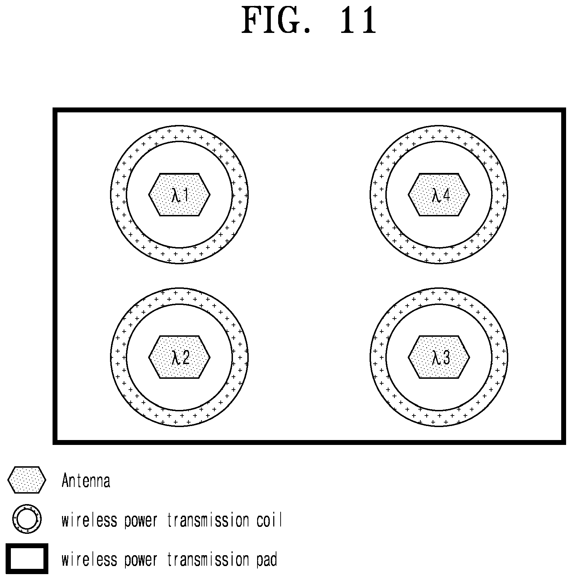

In FIGS. 10 and 11, the transmission coil 110 is formed in a circular shape to surround the transmission antenna 140. Each transmission antenna 140 (or port) may output frequency or wavelength-controlled e transmission signals for guiding the landing position.

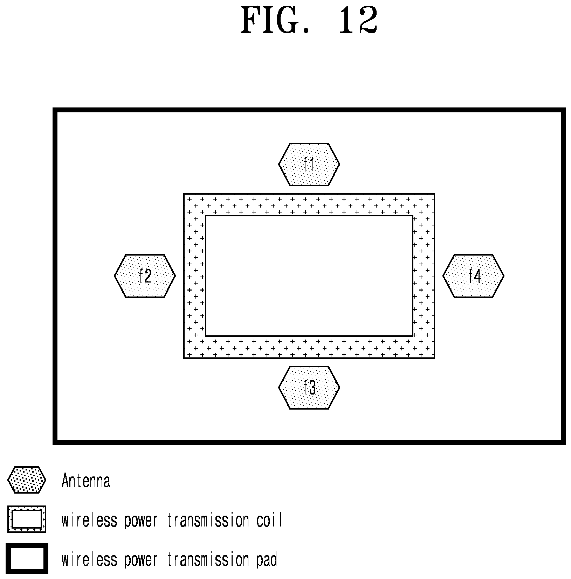

Referring to FIGS. 12 to 13, the transmission coil 110 is formed in a rectangular shape while formed in the arrangement of the transmission antenna. The transmission antenna 140 (or port) may output frequency or wavelength-controlled transmission signals for guiding the landing position.

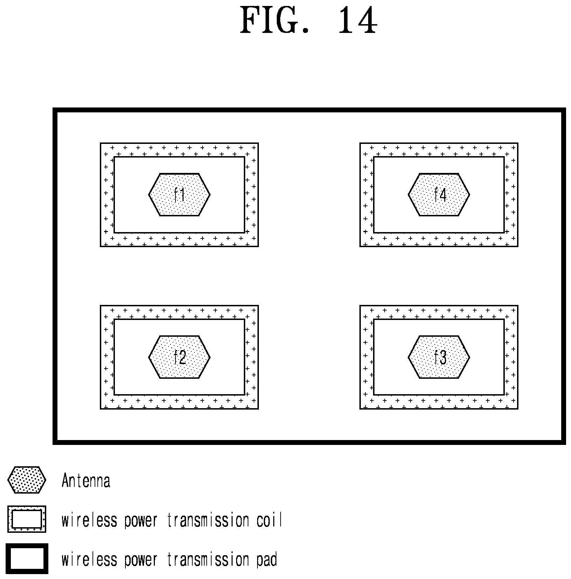

Referring to FIGS. 14 to 15, the transmission coil 110 is formed in a rectangular shape to surround each transmission antenna 140. Each transmission antenna 140 (or port) may output frequency or wavelength-controlled transmission signals for inducing the landing position.

In FIGS. 8 to 15, the frequencies or wavelengths are numbered, and it may be understood that signals of different frequencies or wavelengths are output from the four transmission antennas, but at least two signals output from the four transmission antennas have the same frequency or wavelength. In addition, the number of transmission antennas and the number of transmission coils in FIGS. 8 to 15 are merely examples, and the present disclosure includes a wireless power transmitter having various numbers of transmission antennas or transmission coils.

Although the above-described embodiments of the present disclosure have disclosed that the device (or apparatus) for controlling a user interface (UI) and components included therein perform such control for convenience of description, the device (or apparatus) and the components belonging thereto are names only and the scope of rights is not dependent thereon.

In other words, the proposed technology of the present disclosure may be performed by devices having names other than the control device. In addition, the method, scheme, or the like described above may be performed by software or code readable by a computer or other machine or device for vehicle control.

In addition, as another aspect of the present disclosure, the operation of the proposed technology described above may be provided as code that may be implemented, realized, or executed by a "computer" (a generic concept including a system on chip (SoC) or a (micro) processor) or a computer-readable storage medium, a computer program product, or the like storing or containing the code. The scope of the present disclosure is extendable to the code or the computer-readable storage medium or the computer program product storing or containing the code.

Detailed descriptions of preferred embodiments of the present disclosure disclosed as described above have been provided such that those skilled in the art may implement and realize the present disclosure.

Although the present disclosure has been described above with reference to preferred embodiments, those skilled in the art will understand that various modifications and changes can be made to the present disclosure set forth in the claims below.

Accordingly, the present disclosure is not intended to be limited to the embodiments shown herein but is to be accorded the widest scope consistent with the principles and novel features disclosed herein.

As is apparent from the above description, the method, device, and system for wireless charging for UAV according to the embodiments of the present disclosure have the following effects.

The embodiments of the present disclosure can provide a wireless charging method for UAV, and a device and system for the same.

The embodiments of the present disclosure can provide a method for aligning wireless power transceivers for efficient wireless charging of UAV, and a device and system for the same.

It will be apparent to those skilled in the art that various modifications and variations can be made in the present disclosure without departing from the spirit or scope of the disclosures. Thus, it is intended that the present disclosure covers the modifications and variations of this disclosure provided they come within the scope of the appended claims and their equivalents.

## Claims

1. A wireless charging device for an unmanned aerial vehicle (UAV), the wireless charging device comprising:
a power transmission coil configured to transmit power to the UAV;
a plurality of antennas configured to output signals for guiding the UAV to land; and
a controller configured to:
control the power transmission coil, the antennas, or a combination thereof;
detect whether the UAV has moved to an area for wireless charging;
generate a signal to guide the landing of the UAV for wireless charging; and
output the generated signal,
wherein the generated signal includes at least one of a beamformed frequency signal, a wavelength controlled signal, or a combination thereof.

2. The wireless charging device according to claim 1, wherein the controller is further configured to:
generate a plurality of frequency signals or wavelength signals;
perform beamforming on the generated frequency signals or wavelength signals; and
output the plurality of beamformed signals using the plurality of antennas.

3. The wireless charging device according to claim 1 or 2, further comprising:
a sensor configured to detect whether the UAV has completed a landing.

4. The wireless charging device according to any one of claims 1 to 3, wherein the controller is further configured to:
stop output of the plurality of beamformed signals in response to detecting a landing completion of the UAV.

5. The wireless charging device according to any one of claims 1 to 4, wherein the controller is further configured to:
start wireless charging for the UAV in response to detecting a landing completion of the UAV.

6. The wireless charging device according to any one of claims 1 to 5,
wherein the UAV includes one or more batteries configured to be charged by power received from the power transmission coil, and
wherein the one or more batteries provide power to the UAV.

7. The wireless charging device according to any one of claims 1 to 6, wherein the UAV comprises an Advanced Air Mobility (AAM), an Urban Air Mobility (UAM), or a Regional Air Mobility (RAM).

8. An unmanned aerial vehicle (UAV) comprising:
a power reception coil configured to receive power from a wireless power transmitter;
an antenna configured to receive signals for guiding a landing of the UAV; and
a controller configured to:
control the power reception coil, the antenna, or a combination thereof;
detect whether the UAV has moved to an area for wireless charging;
receive a beamformed signal to guide the landing of the UAV for wireless charging; and
control a landing posture of the UAV based on the received beamformed signal,
wherein the beamformed signal includes at least one of a frequency controlled signal, a wavelength controlled signal, or a combination thereof.

9. The UAV according to claim 8, further comprising:
one or more batteries configured to be charged by power received from the power transmission coil,
wherein the one or more batteries provide power to the UAV.

10. A control method for performing wireless charging of an unmanned aerial vehicle (UAV) by a wireless charging device that includes a power transmission coil configured to transmit power to the UAV, a plurality of antennas configured to output signals for guiding landing of the UAV, and a controller configured to control the power transmission coil, the antennas, or a combination thereof, the control method comprising:
detecting whether the UAV has moved to an area for wireless charging;
generating a signal to guide a landing of the UAV for wireless charging; and
outputting the generated signal,
wherein the generated signal includes at least one of a beamformed frequency signal, a wavelength controlled signal, or a combination thereof.

11. The control method according to claim 10, further comprising:
generating at least one of a plurality of frequency signals, a plurality of wavelength signals, or a combination thereof;
performing beamforming on at least the generated frequency signals, the generated wavelength signals, or a combination thereof; and
outputting the plurality of beamformed signals using the plurality of antennas.

12. The control method according to claim 10 or 11, further comprising:
stopping the outputting of the plurality of beamformed signals in response to detecting a completion of the landing of the UAV.

13. A control method for performing wireless charging by an unmanned aerial vehicle (UAV) that includes a power reception coil configured to receive power from a wireless power transmitter, an antenna configured to receive signals for guiding landing of the UAV, and a controller configured to control the power reception coil, the antenna, or a combination thereof, the control method comprising:
detecting whether the UAV has moved to an area for wireless charging;
receiving a beamformed signal to guide a landing of the UAV for wireless charging; and
controlling a landing posture of the UAV based on the received beamformed signal,
wherein the beamformed signal includes at least one of a frequency controlled signal, a wavelength controlled signal, or a combination thereof.

14. The control method of claim 13, further comprising:
aligning, by the UAV, the power reception coil of the UAV to a power transmission coil of the wireless power transmitter by adjusting the landing posture of the UAV.

15. The control method of claim 13 or 14, wherein the UAV is configured to land on a vertiport by aligning the power transmission coil of the wireless power transmitter with the power reception coil of the UAV.
